(19) Europäisches Patentamt
European Patent Office
Office européen des brevets

(11) **EP 0 911 195 B1**

(12) **EUROPÄISCHE PATENTSCHRIFT**

(45) Veröffentlichungstag und Bekanntmachung des Hinweises auf die Patenterteilung:
**23.10.2002 Patentblatt 2002/43**

(51) Int Cl.[7]: **B60G 21/055**, F16F 1/38

(21) Anmeldenummer: **98116914.7**

(22) Anmeldetag: **08.09.1998**

(54) **Gummi/Metall-Lager zur Anlenkung eines Stabilisators an einem Kraftfahrzeugaufbau**

Rubber-and-metal bush for mounting a stabiliser bar on a motor vehicle body

Palier métal-caoutchouc pour monter une barre stabilisatrice sur la carosserie d'un véhicule à moteur

(84) Benannte Vertragsstaaten:
**DE ES FR GB IT SE**

(30) Priorität: **21.10.1997 DE 19746357**

(43) Veröffentlichungstag der Anmeldung:
**28.04.1999 Patentblatt 1999/17**

(73) Patentinhaber: **VORWERK & SOHN GmbH & Co. KG**
**D-42287 Wuppertal (DE)**

(72) Erfinder: **Tepel, Jörg Peter**
**58285 Gevelsberg (DE)**

(74) Vertreter: **Honke, Manfred, Dr.-Ing. et al**
**Patentanwälte,**
**Andrejewski, Honke & Sozien,**
**Theaterplatz 3**
**45127 Essen (DE)**

(56) Entgegenhaltungen:
**EP-A- 0 381 566        EP-A- 0 381 945**
**EP-A- 0 384 799        DE-A- 4 204 252**
**DE-C- 4 413 666        DE-U- 8 901 526**

**Beschreibung**

Die Erfindung betrifft ein Gummi/Metall-Lager zur Anlenkung eines Stabilisators an einem Kraftfahrzeugaufbau, mit einem den Stabilisator umschließenden Gummikörper, und mit einer am Kraftfahrzeugaufbau befestigbaren Buchse zur Aufnahme des Gummikörpers und des darin geführten Stabilisators. - Kraftfahrzeugaufbau meint im Rahmen der Erfindung insbesondere die gesamte Karosserie inklusive Bodengruppe bzw. Bodenblech.

Ein derartiges Gummi/Metall-Lager ist aus der Praxis und der EP-A-0 707 988 bekannt. Es dient regelmäßig zur Führung und Halterung bzw. Anlenkung des Stabilisators an einem Bodenblech des Kraftfahrzeugaufbaus. Bei einem Stabilisator handelt es sich regelmäßig um eine sogenannte Stabfeder, meist aus U-förmig gebogenem Rundstahl, zur Verhärtung der Federung bei einseitigem Ein- und Ausfedern. Zu diesem Zweck verbinden Stabilisatoren die beiden Räder einer Achse, um so beispielsweise bei Kurvenfahrt die Neigung des Kraftfahrzeugaufbaus zu verringern. Denn das jeweils eingefederte Rad bewirkt eine Torsion des Stabilisators und dementsprechende Rückstellkräfte, die einer Neigung des Kraftfahrzeugaufbaus entgegenwirken. Folglich bleibt bei gleichen Federwegen beider Räder einer Achse der Stabilisator unwirksam. Jedenfalls müssen in solchen Gummi/Metall-Lagern zur Anlenkung und Halterung eines Stabilisators an einem Kraftfahrzeugaufbau insbesondere Drehbewegungen des Stabilisators infolge Torsion aufgenommen werden.

Das bekannte Gummi/Metall-Lager nach der EP-A-0 707 988 weist einen einteiligen Gummikörper auf, welcher entlang eines Spaltes zur Einführung des Stabilisators aufgespreizt werden muß. Erst im Anschluß hieran kann die Buchse übergestülpt und eine Befestigung am Fahrzeugaufbau erfolgen. Dies ist fertigungstechnisch unbefriedigend, da Buchse und Gummikörper als getrennte Teile ausgeführt sind. Außerdem besteht beim Aufspreizen des Gummikörpers die Gefahr, daß dieser beschädigt wird, beispielsweise feine Risse erzeugt werden.

Im übrigen werden nach dem Stand der Technik prinzipiell zwei weitere unterschiedliche Entwicklungslinien zur Realisierung derartiger Gummi/Metall-Lager verfolgt. Zum einen handelt es sich bei dem Gummikörper und der Buchse um voneinander getrennte Teile, welche erst im Zuge der Montage zusammengefügt werden. Dies ist einerseits mit Montageproblemen verbunden, führt andererseits dazu, daß ein Durchrutschen des Stabilisators im Gummikörper bewußt in Kauf genommen wird. Zu diesem Zweck setzt man beispielsweise reibwertvermindernde (Teflon-)Schichten zwischen Gummikörper und Stabilisator ein. Hierdurch wird nicht nur der Montage- und Fertigungsaufwand erhöht, sondern es besteht insbesondere die Gefahr, daß die bekannten Lager bei Kurvenfahrten Geräusche durch Quietschen von sich geben. Dies macht sich insbesondere bei Temperaturschwankungen (Sommer- und Winterbetrieb) und damit einhergehender Änderung der Elastizität des Gummikörpers (weich-hart) negativ bemerkbar. Auch Feuchtigkeit, Salz und ähnliche Umwelteinflüsse wirken sich auf das Geräuschverhalten der bekannten Gummi/Metall-Lager negativ aus.

Zum anderen kennt man das direkte Aufvulkanisieren des Gummikörpers auf den Stabilisator. Bei dieser Ausführungsform werden zwar Drehbewegungen des Stabilisators direkt im Gummikörper aufgenommen, allerdings ist die Herstellung äußerst aufwendig, weil an die ausladenden Stabilisatoren kleine Gummikörper anvulkanisiert werden müssen. Im übrigen erfordert ein Verschleiß der bekannten Gummi/Metall-Lager den Austausch des gesamten Stabilisators mit angeformten Gummikörper. Hinzu kommt, daß die Lage des Gummikörpers im Vergleich zum Stabilisator durch die feste Verbindung nicht flexibel gestaltet werden kann.

Unabhängig davon ist aus der deutschen Patentschrift 28 38 391 ein Gummi/Metall-Lager für die Lagerung eines Radführungsgliedes bekannt geworden, welches einen zwischen einer äußeren und einer inneren Metallbüchse angeordneten und daran anvulkanisierten elastischen Gummikörper aufweist. Hier sind zwecks Erzielung einer radialen Verschiebung beider Metallbüchsen die dem Gummikörper zugewandten Mantelflächen der inneren und der äußeren Metallbüchse - in bezug auf die Lagerachse des Gummi/Metall-Lagers - zumindest teilweise schräg verlaufend ausgebildet.

Darüber hinaus ist durch die deutsche Patentschrift 40 06 922 ein Hinterachslager für eine Verbundlenkerachse für Kraftfahrzeuge mit einer Gummi/Metall-Buchse aus einer metallischen Innenbuchse, einer metallischen Außenbuchse und einem zwischen Innenbuchse und Außenbuchse einvulkanisierten Gummihohlkörper bekannt geworden. Das letztgenannte Hinterachslager hat sich an sich bewährt, führt jedoch bei der Lösung der eingangs angegebenen Problematik nicht weiter.

Dies gilt auch für die bekannten Lehren nach der gattungsgemäßen EP-A-0 384 799 und EP-A-0 227 869, welche sich mit Gummi/Metall-Lagern beschäftigen, die zur Halterung eines Torsionsstabes dienen. Hier wird zwar eine Art Vormontage angesprochen, allerdings dergestalt, daß ein geschlitzter Gummikörper zur Aufnahme des Torsionsstabes durch Kleben auf einem Außenelement befestigt wird. Eine derartige Vorgehensweise kann schon deshalb nicht befriedigen, weil fertigungsbedingte Toleranzen während der Montage nicht (mehr) ausgeglichen werden können.

Der Erfindung liegt das technische Problem zugrunde, ein Gummi/Metall-Lager der eingangs beschriebenen Ausführungsform zu schaffen, welches einfach und preiswert herstellbar und leicht montierbar ist sowie insbesondere geräuscharm arbeitet.

Zur Lösung dieser Aufgabe schlägt die Erfindung bei einem gattungsgemäßen Gummi/Metall-Lager zur Anlenkung eines Stabilisators an einem Kraftfahrzeugaufbau vor, daß der Gummikörper zweiteilig ausgebildet ist und dazu im wesentlichen aus einem in der Buchse befestigten Anschlagkörper und einem über ein Gummi-Filmscharnier klappbar an die Buchse angeschlossenen Schließkörper besteht, wobei der Stabilisator bei abgeklapptem Schließkörper in die Buchse einführbar und an den Anschlagkörper anlegbar ist, und wobei der Stabilisator durch den im Zuge der Montage anklappbaren Schließkörper unter Erzeugen einer Verspannung des Gummikörpers durch Reibschluß mit dem Gummikörper drehfest verbindbar ist. Folglich wird insbesondere ein Quietschen bzw. eine Geräuschentwicklung des Gummi/Metall-Lagers vermieden, und zwar durch die drehfeste Verbindung von einerseits Gummikörper und andererseits Stabilisator bei gleichzeitig einfacher Montage und Fertigung. - Nach bevorzugter Ausführungsform ist der Anschlagkörper in die Buchse einvulkanisiert. Der Schließkörper kann mittels eines an die Buchse und den Schließkörper anvulkanisierten Gummi-Filmscharniers an die Buchse klappbar angeschlossen sein. Nach einer bevorzugten Ausführungsform, welcher selbständige Bedeutung zukommt, ist vorgesehen, daß der Schließkörper einen kraftfahrzeugseitig anvulkanisierten Aufbauanschlag aufweist, welcher bei montiertem Gummi/Metall-Lager am Kraftfahrzeugaufbau anliegt. Ferner ist bei einer weiteren besonders bevorzugten Ausführungsform vorgesehen, daß der Anschlagkörper und der Schließkörper jeweils als Gummihalbschalen, einerseits Schließhalbschale, andererseits Anschlaghalbschale, ausgebildet sind, wobei die Anschlaghalbschale oberhalb des Gummi-Filmscharniers eine heruntergezogene Nase unter Bildung einer Aussparung für einen hierin im Zuge der Montage des Gummi/Metall-Lagers scharnierartig eingreifenden Steg der Schließhalbschale aufweist. Außerdem kann der in montierten Zustand unter Reibschluß mit dem Stabilisator verbundene Gummikörper federelastisch ausgebildet sein und Torsionswinkel des Stabilisators im Bereich von etwa 10° bis 60°, vorzugsweise 15° bis 35°, durch intramolekulare Federkräfte aufnehmen.

Im allgemeinen ist die Buchse als Metallstreifen aus einer Aluminiumlegierung ausgeführt, wobei der Metallstreifen im Querschnitt angenähert die Form eines Omega ($\Omega$) mit einem Buchsenauge zur Aufnahme des Gummikörpers und beidseitigen Befestigungsschenkeln aufweist. Auch der an den Schließkörper anvulkanisierte Aufbauanschlag ist im allgemeinen aus einer Aluminiumlegierung gefertigt. Das Buchsenauge besitzt hauptsächlich innenseitig, dem Schließkörper zugewandt und dem Filmscharnier gegenüberliegend, eine Rastnase, welche für eine Vormontage des Gummi/Metall-Lagers auf dem Stabilisator von einer Kante des Schließkörpers mit Rastwirkung überfahren wird. Ein Befestigungsschenkel der Buchse ist regelmäßig als eine Aussparung im Fahrzeugaufbau hintergreifender Nasenschenkel und der andere Befestigungsschenkel als mit dem Fahrzeugaufbau verbindbarer Schraubschenkel ausgebildet. Ferner ist bevorzugt vorgesehen, daß sich der Nasenschenkel und der Schraubschenkel im wesentlichen in parallel zueinander und voneinander beabstandeten Ebenen erstrecken. Dabei hängt der Abstand der Ebenen in der Regel von der Stärke eines von dem Nasenschenkel hintergriffenen Bodenblechs des Fahrzeugaufbaus und der im Zuge der Montage vorgebbaren Verspannung des Gummikörpers ab, wobei der Nasenschenkel mit seiner Oberseite an einer Innenfläche des Bodenblechs und der Schraubschenkel mit seiner Unterseite an einer Außenfläche des Bodenblechs anliegt. Folglich läßt sich unter anderem über den Abstand der Ebenen die Verspannung des Gummikörpers einstellen. Im allgemeinen entspricht jedoch der Abstand der vorerwähnten Ebenen der Stärke des von dem Nasenschenkel hintergriffenen Bodenblechs, wobei der Schließkörper mit seiner Unterseite um ein bestimmtes, die Verspannung des Gummikörpers bestimmendes Maß über die Unterseite des Schraubschenkels vorkragt.

Durch diese Maßnahmen der Erfindung wird zunächst einmal ein einfach und preiswert herstellbares Gummi/Metall-Lager zur Anlenkung eines Stabilisators an einem Kraftfahrzeugaufbau zur Verfügung gestellt. Denn die Herstellung beschränkt sich auf das Befestigen bzw. Einvulkanisieren des Anschlagkörpers bzw. der Anschlaghalbschale in der Buchse und das Anschließen bzw. Anvulkanisieren des Schließkörpers an die Buchse. Dies erfolgt über das Gummi-Filmscharnier, welches regelmäßig den Aufbauanschlag mit der Buchse verbindet. D.h., Anschlagkörper bzw. Anschlaghalbschale und Buchse bzw. Buchsenauge sowie Aufbauanschlag und Schließkörper bzw. Schließhalbschale lassen sich jeweils in einem vorgeschalteten Schritt durch beispielsweise Blechumformung (Tiefziehen) und Vulkanisation herstellen. Anschließend kann der Schließkörper mit dem kraftfahrzeugseitig anvulkanisierten Aufbauanschlag über das Gummi-Filmscharnier mit der Buchse verbunden werden. Die Buchse als solches ist aus einem (tiefgezogenen und ggf. mit Löchern versehenen) Metallstreifen aus einer Aluminiumlegierung ebenfalls einfach und problemlos herstellbar. Gleichzeitig wird insgesamt ein preiswertes Produkt zur Verfügung gestellt.

Darüber hinaus ist die Montage insofern vereinfacht und mit Kostenvorteilen verbunden, als das erfindungsgemäße Gummi/Metall-Lager insgesamt einteilig aufgebaut ist. Die Verbindung verschiedener Bauteile - wie nach dem Stand der Technik erforderlich - ist nicht mehr vonnöten. Außerdem kann auf das kosten- und zeitaufwendige Aufvulkanisieren des Gummikörpers auf den Stabilisator verzichtet werden. Durch die nach bevorzugter Ausführungsform vorgesehene Rastnase besteht darüber hinaus die Möglichkeit, ein oder mehrere erfindungsgemäße Gummi/Metall-Lager im Zuge einer Vormontage mit einem Stabilisator zur verbinden. D.h., die solchermaßen vormontierten Gummi/Metall-Lager lassen sich komplett mit dem Stabilisator als vormontierte Baugruppe der Endmontage zuführen. Diese Endmontage ist darüber hinaus dadurch erleichtert, als der Stabilisator während der Befestigung der Buchse am Kraftfahrzeugaufbau im Gummi/Metall-Lager fixiert ist, folglich nicht hin- und herschwenken kann. Hierdurch wird gleichzeitig potentiellen Verletzungsgefahren bei der Endmontage vorgebeugt.

Darüber hinaus ist von besonderer Bedeutung, daß Drehbewegungen des Stabilisators durch intramolekulare Federkräfte des Gummikörpers aufgenommen werden, und zwar regelmäßig, indem Torsionswinkel des Stabilisators im Bereich von etwa 10° bis 60°, vorzugsweise 15° bis 35°, zu einer entsprechenden Torsion des Gummikörpers führen. D.h., ein Durchrutschen des Stabilisators im Gummikörper - wie es bei dem Stand der Technik durchweg erfolgt - wird bewußt vermieden. Folglich werden Quietschgeräusche zuverlässig verhindert, da gerade ein Reibschluß zwischen Gummikörper und Stabilisator vorliegt, dementsprechend der Gummikörper Torsionen des Stabilisators folgt. Hierbei geht die Erfindung von der Erkenntnis aus, daß vorliegend in der Regel Reibungszahlen von ca. 0,5 (Gummi auf Metall) erreicht werden, die aufgrund der Verspannung des Gummikörpers zu einer einwandfreien Verbindung des Stabilisators mit dem Gummikörper unter Reibschluß führen. Folglich werden - im Gegensatz zum Stand der Technik - bewußt hohe Reibungszahlen eingestellt, um gezielt eine Torsion des Gummikörpers zu bewirken.

Derartige Torsionen des Gummikörpers hat man beim Stand der Technik bisher ausschließlich dadurch erreichen können, daß dieser Gummikörper in einem komplizierten und aufwendigen Fertigungsschritt auf den Stabilisator direkt aufvulkanisiert wurde. Im Gegensatz hierzu liefert die Erfindung nicht nur ein einfach und preiswert herzustellendes Gummi/Metall-Lager, sondern ist zudem insbesondere die Montage deutlich vereinfacht. Dies gilt auch im Hinblick auf die durch die Erfindung erreichte Flexibilität der Positionierung des Gummi/Metall-Lagers im Vergleich zum Stabilisator. Hierin sind die wesentlichen Vorteile zu sehen.

Weitere erfindungswesentliche Merkmale sind im folgenden aufgeführt. So ist der Gummikörper regelmäßig aus einem Elastomer auf Gummi- oder Kunststoffbasis gefertigt. Bei diesem Elastomer handelt es sich bevorzugt um Naturkautschuk (NR = "natural rubber") mit einem Anwendungsbereich von ca. -50 °C bis +90 °C, einer Shore-A-Härte von ca. 20 bis 100, vorzugsweise 60, einer Reißdehnung von 100% bis 800%, vorzugsweise mehr als 400%, und einer Dichte von etwa 1,2 g/cm$^3$. Schließlich kann der Gummikörper stabilisatorseitig ein oder mehrere Lagerschalen mit oder ohne anvulkanisierter Gummiauflage aufweisen. Selbstverständlich können die Lagerschalen an den Gummikörper anvulkanisiert bzw. in diesen einvulkanisiert sein.

Im folgenden wird die Erfindung anhand einer lediglich ein Ausführungsbeispiel darstellenden Zeichnung näher erläutert; es zeigen:

Fig. 1      eine Fahrzeugachse mit den wesentlichen Bauteilen, inklusive Stabilisator,

Fig. 2a      das erfindungsgemäße Gummi/Metall-Lager in aufgeklapptem Zustand,

Fig. 2b      das Lager nach Fig. 2a in montiertem Zustand, und

Fig. 3      eine Aufsicht auf das Lager nach den Fig. 2a und 2b, teilweise im Schnitt.

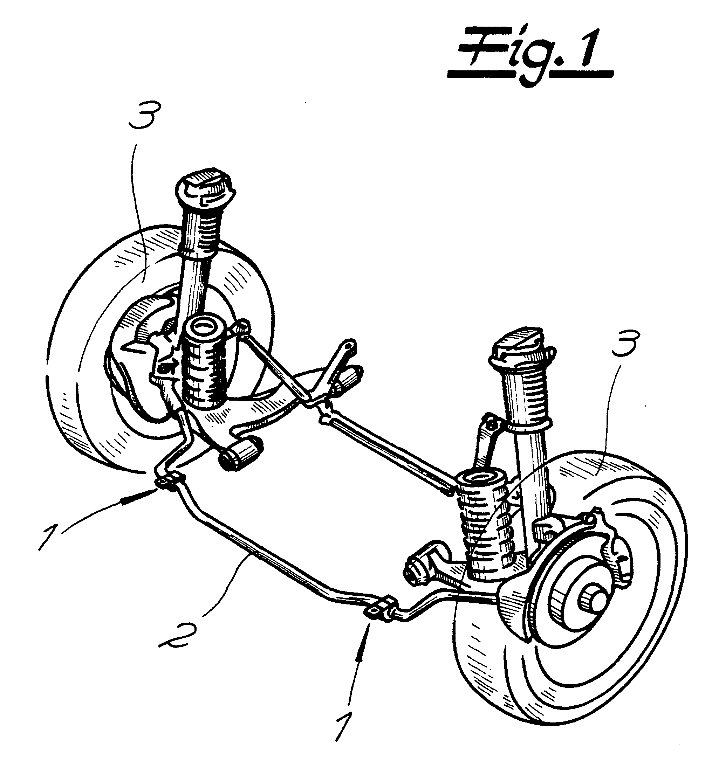

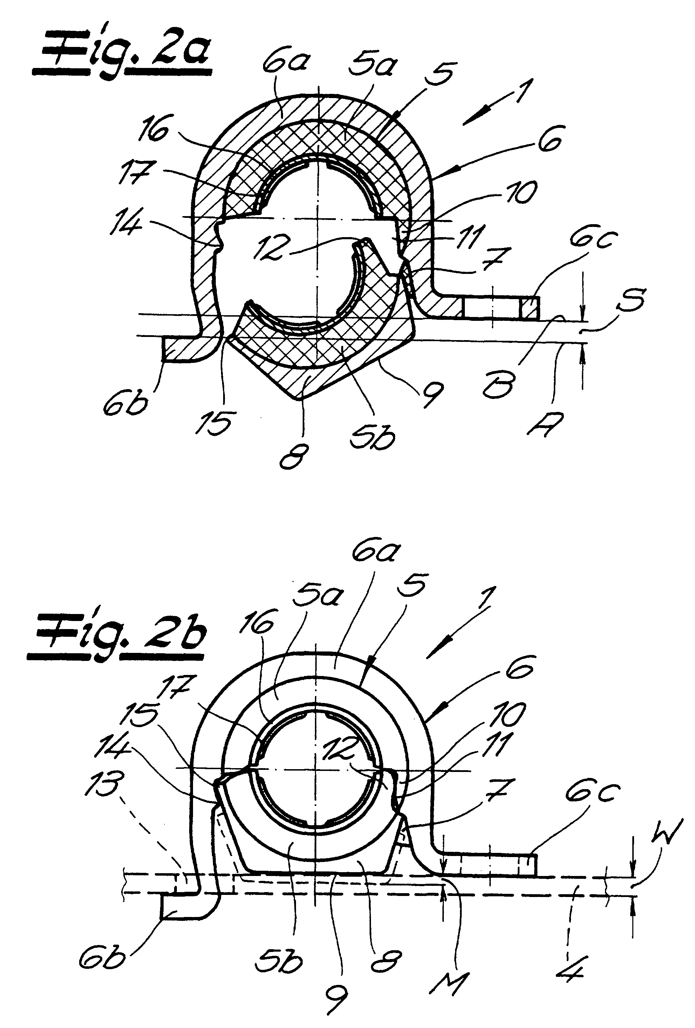

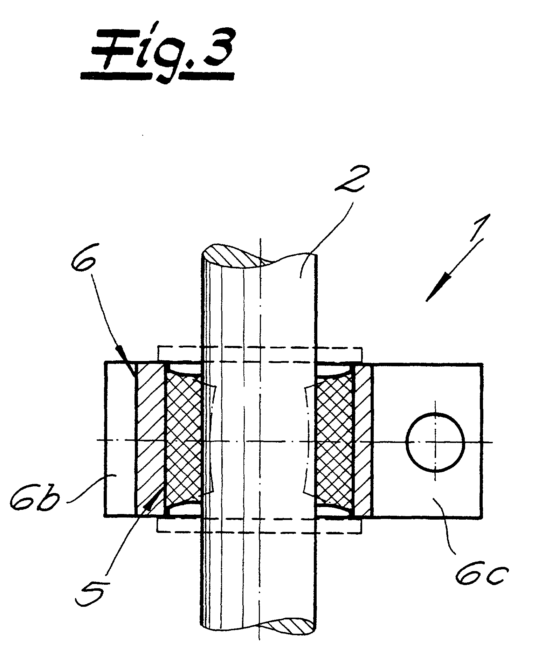

In den Figuren ist ein Gummi/Metall-Lager 1 zur Anlenkung eines Stabilisators 2 an einem (nicht gezeigten) Kraftfahrzeugaufbau dargestellt. Ausweislich der Fig. 1 verbindet der Stabilisator 2 die beiden Räder 3 einer Achse eines Kraftfahrzeuges, und führt zur Verhärtung der Federung bei einseitigem Ein- und Ausfedern der Räder 3. Der Stabilisator 2 wirkt folglich bei Kurvenfahrt der Neigung des (nicht gezeigten) Kraftfahrzeugaufbaus entgegen. Von dem Kraftfahrzeugaufbau ist lediglich schematisch in der Fig. 2b ein Teil eines Bodenblechs 4 gezeigt. - Nach den Fig. 2a, 2b und 3 besteht das Gummi/Metall-Lager 1 in seinem grundsätzlichen Aufbau aus einem den Stabilisator 2 umschließenden Gummikörper 5 und einer am Kraftfahrzeugaufbau bzw. am Bodenblech 4 befestigbaren Buchse 6 zur Aufnahme des Gummikörpers 5 und des darin geführten Stabilisators 2. Der Gummikörper 5 besteht im wesentlichen aus einem in der Buchse 6 befestigten Anschlagkörper 5a und einem klappbar an die Buchse 6 angeschlossenen Schließkörper 5b. Der Stabilisator 2 ist bei abgeklapptem Schließkörper (vgl. Fig. 2a) in die Buchse 6 einführbar und an den Anschlagkörper 5a anlegbar, wobei der Stabilisator 2 durch den im Zuge der Montage anklappbaren Schließkörper 5b unter Erzeugen einer Verspannung des Gummikörpers 5 durch Reibschluß mit dem Gummikörper 5 drehfest verbindbar ist. D.h., in der in Fig. 2b dargestellten Situation des montierten Gummi/Metall-Lagers 1 (durchgezogene Linien) ist der Stabilisator 2 durch Reibschluß mit dem Gummikörper 5 fest verbunden, so daß der Gummikörper 5 Drehbewegungen des Stabilisators 2 federelastisch durch intramolekulare Federkräfte aufnehmen kann.

Im einzelnen ist der Anschlagkörper 5a in die Buchse 6 einvulkanisiert. Der Schließkörper 5b ist mittels eines an die Buchse 6 und den Schließkörper 5b anvulkanisierten Gummi-Filmscharniers 7 an die Buchse 6 klappbar angeschlossen. Zusätzlich weist der Schließkörper 5b einen kraftfahrzeugseitig anvulkanisierten Aufbauanschlag 8 auf, welcher bei montiertem Gummi/Metall-Lager 1 am Kraftfahrzeugaufbau bzw. Bodenblech 4 anliegt (vgl. Fig. 2b). Dieser Aufbauanschlag 8 ist - wie die Buchse 6 - aus einer Aluminiumlegierung gefertigt. Er weist nach dem Ausführungsbeispiel eine flache Unterseite 9 auf, welche bei montiertem Gummi/Metall-Lager 1 flach auf dem Bodenblech 4 bzw. Kraftfahrzeugaufbau aufliegt. Der im montierten Zustand (vgl. Fig. 2b) unter Reibschluß mit dem Stabilisator 2 verbundene Gummikörper 5 ist federelastisch ausgebildet und nimmt Torsionswinkel des Stabilisators 2 im Bereich von etwa 10° bis 60°, vorzugsweise 15° bis 35°, durch intramolekulare Federkräfte auf.

D.h., die Auslegung des Gummikörpers 5 ist im Zuge seiner Vernetzung und durch die Materialauswahl so getroffen, daß die vorgenannten Torsionswinkel elastisch, d.h., ohne Beschädigung oder Reißen des Gummikörpers 5, mit einwandfreiem Rückstellen aufgenommen werden. Zu diesem Zweck ist der Gummikörper 5 aus einem Elastomer auf Gummi- oder Kunststoffbasis gefertigt. Bei diesem Elastomer handelt es sich nach dem Ausführungsbeispiel um Naturkautschuk (NR) mit einem Anwendungsbereich von ca. -50 °C bis +90 °C, einer Shore-A-Härte von ca. 20 bis 100, vorzugsweise 60, einer Reißdehnung von 100% bis 800%, vorzugsweise mehr als 400%, und einer Dichte von etwa 1,2 g/cm³. Folglich ist der Gummikörper 5 für den Einsatz in einem Kraftfahrzeug prädestiniert, zumal Alterungseffekte nur eine untergeordnete Rolle spielen.

Im übrigen kann nach der Erfindung durch die feste Verbindung zwischen Stabilisator 2 und Gummikörper 5 infolge des Reibschlusses auf Halteringe verzichtet werden, wie sie nach dem Stand der Technik obligatorisch sind. Derartige Halteringe dienen regelmäßig dazu, Hin- und Herbewegungen des Stabilisators 2 in Längsrichtung in dem Gummi/Metall-Lager 1 zu verhindern (vgl. auch die in Fig. 3 lediglich gestrichelt angedeuteten Halteringe). Erfindungsgemäß kann hierauf verzichtet werden bzw. können solche Halteringe so ausgelegt werden, daß sie im Rahmen der Erfindung lediglich Dichtungsfunktion übernehmen.

Der Anschlagkörper 5a und der Schließkörper 5b sind jeweils als Gummihalbschalen, einerseits Schließhalbschale 5b, andererseits Anschlaghalbschale 5a, ausgebildet. Die Anschlaghalbschale 5a weist oberhalb des Gummi-Filmscharniers 7 eine heruntergezogene Nase 10 unter Bildung einer Aussparung 11 für einen hierin im Zuge der Montage des Gummi/Metall-Lagers 1 scharnierartig eingreifenden Steg 12 der Schließhalbschale 5b auf. Nach dem Ausführungsbeispiel ist die Buchse 6 als Metallstreifen aus einer Aluminiumlegierung ausgebildet, wobei der Metallstreifen im Querschnitt angenähert die Form eines Omega (Ω) mit einem Buchsenauge 6a zur Aufnahme des Gummikörpers 5 und beidseitigen Befestigungsschenkeln 6b, 6c aufweist.

Ein Befestigungsschenkel 6b, 6c ist als eine Aussparung 13 im Fahrzeugaufbau bzw. Bodenblech 4 hintergreifender Nasenschenkel 6b und der andere Befestigungsschenkel 6b, 6c als mit dem Fahrzeugaufbau bzw. Bodenblech 4 verbindbarer Schraubschenkel 6c ausgebildet. Mit Hilfe dieses Schraubschenkels 6c wird die Buchse 6 am Bodenblech 4 befestigt, nachdem die Nase 6b in die Aussparung 13 eingeführt wurde und das Bodenblech 4 hintergreift. Hierzu weist der Schraubschenkel 6c eine Bohrung für eine (nicht dargestellte) Schraube zur Befestigung am Bodenblech 4 auf.

Der Nasenschenkel 6b und der Schraubschenkel 6c erstrecken sich im wesentlichen parallel zueinander, und zwar in voneinander beabstandeten Ebenen A und B. Der Abstand S dieser Ebenen A und B ist insbesondere in Fig. 2a dargestellt. Er beträgt nach dem Ausführungsbeispiel ca. 5 mm. Dieser Abstand S der Ebenen A und B hängt von der Stärke W des von dem Nasenschenkel 6b hintergriffenen Bodenblechs 4 des Fahrzeugaufbaus und der im Zuge der Montage vorgebbaren Verspannung Δ des Gummikörpers 5 ab. D.h., der Abstand S setzt sich wie folgt zusammen:

$$S = W + \Delta.$$

Nach dem Ausführungsbeispiel ist Δ = 0, d.h., der Abstand S der Ebenen A und B entspricht der Stärke W des von dem Nasenschenkel 6b hintergriffenen Bodenblechs 4. Dabei liegt der Nasenschenkel 6b mit seiner Oberseite an einer Innenfläche des Bodenblechs 4 und der Schraubschenkel 6c mit seiner Unterseite an einer Außenfläche des Bodenblechs 4 an. Der Schließkörper 5b bzw. die Schließhalbschale 5b kragt ihrerseits mit ihrer Unterseite 9 um ein bestimmtes, die Verspannung des Gummikörpers 5 bestimmendes Maß M über die Unterseite des Schraubschenkels 6c vor.

Je nach Größe dieses Maßes M wird der Schließkörper bzw. die Schließhalbschale 5b im Zuge der Montage des Gummi/Metall-Lagers 1 mehr oder minder an den Anschlagkörper bzw. die Anschlaghalbschale 5a angedrückt. Dabei ist der nicht montierte Zustand gestrichelt in Fig. 2b dargestellt, während der montierte, verspannte Zustand des Gummikörpers 5 durchgezogen in Fig. 2b gezeichnet ist. Jedenfalls läßt sich auf diese Weise die Verspannung des Gummikörpers 5 einstellen. Selbstverständlich kann dies auch über das Maß Δ erfolgen, was jedoch im Ausführungsbeispiel nicht dargestellt ist und letztlich dazu führt, daß Nasenschenkel 6b und Schraubschenkel 6c bzw. die hierzu korrespondierenden Ebenen A und B einen (stumpfen) Winkel einschließen.

Schließlich weist das Buchsenauge 6a innenseitig, dem Schließkörper 5b zugewandt und dem Filmscharnier 7 gegenüberliegend, eine Rastnase 14 auf, welche für eine Vormontage des Gummi/Metall-Lagers 1 auf dem Stabilisator 2 von einer Kante 15 des Schließkörpers 5b mit Rastwirkung überfahren wird. Hierdurch läßt sich das dargestellte erfindungsgemäße Gummi/Metall-Lager 1 gleichsam auf dem Stabilisator 2 vormontieren, indem die Kante 15 die Rastnase 14 rastend überfährt. Auf diese Weise kann der Stabilisator 2 zusammen mit den regelmäßig zwei vormontierten Gummi/Metall-Lagern 1 als fertige Baugruppe der Endmontage zugeführt werden.

Insgesamt ist ein besonders kompakter Aufbau des Gummi/Metall-Lagers 1 bei relativ wenig Anteil an Gummi bzw. relativ geringer Größe des Gummikörpers 5 verwirklicht. Durch die Reibschlußverbindung zwischen Stabilisator 2 und Gummikörper 5 werden Drehbewegungen des Stabilisators 2, welche sich ohnehin nur im Bereich bis zu einem Torsionswinkel von ca. 30° bewegen, problemlos intramolekular, d.h., von den vernetzten Molekülen bzw. Molekülketten im Gummikörper 5, aufgenommen. Dies gelingt letztlich dadurch, daß bewußt die relativ hohe Reibungszahl von 0,5 (Gummi auf Stahl) nicht im Sinne einer Reibwertverminderung herabgesetzt wird (wie beim Stand der Technik), sondern vielmehr für den vorbeschriebenen Reibschluß sorgt. Schlußendlich kann der Gummikörper 5 stabilisatorseitig ein oder mehrere Lagerschalen 16 mit oder ohne anvulkanisierte Gummiauflage 17 aufweisen. Für den Fall, daß keine Gummiauflage 17 verwirklicht ist, wird man reibwerterhöhende Maßnahmen, wie z.B. innenseitiges Aufrauhen der Lagerschale 16 oder ähnliches, vorsehen. Jedenfalls ist auch in diesem Fall für eine reibschlüssige Verbindung zwischen Gummikörper 5 und Stabilisator 2 im Betrieb gesorgt. Selbstverständlich kann im Rahmen der Endmontage - und nur hier - durch Überwinden der Haftreibung ein gezieltes Durchrutschen des Stabilisators 2 im Gummikörper 5 stattfinden. - Die Herstellung des Gummi/Metall-Lagers 1, insbesondere das An- und Aufvulkanisieren, erfolgt auf übliche Weise, wie z.B. in der DE-PS 40 25 100 beschrieben.

## Patentansprüche

1. Gummi/Metall-Lager (1) zur Anlenkung eines Stabilisators (2) an einem Kraftfahrzeugaufbau, mit einem den Stabilisator (2) umschließenden Gummikörper (5), und mit einer am Kraftfahrzeugaufbau befestigbaren Buchse (6) zur Aufnahme des Gummikörpers (5) und des darin geführten Stabilisators (2), **dadurch gekennzeichnet, daß** der Gummikörper (5) Zweiteilig ausgebildet ist und dazu im wesentlichen aus einem in der Buchse (6) befestigten Anschlagkörper (5a) und einem über ein Gummi-Filmscharnier (7) klappbar an die Buchse (6) angeschlossenen Schließkörper (5b) besteht.

2. Gummi/Metall-Lager (1) nach Anspruch 1, **dadurch gekennzeichnet, daß** der Anschlagkörper (5a) in die Buchse (6) einvulkanisiert ist.

3. Gummi/Metall-Lager (1) nach Anspruch 1 oder 2, **dadurch gekennzeichnet, daß** das Gummi-Filmscharnier (7) an die Buchse (6) und den Schließkörper (56) anvulkanisiert ist.

4. Gummi/Metall-Lager (1) nach einem der Ansprüche 1 bis 3, **dadurch gekennzeichnet, daß** der Schließkörper (5b) einen kraftfahrzeugseitig anvulkanisierten Aufbauanschlag (8) aufweist, welcher bei montiertem Gummi/Metall-Lager (1) am Kraftfahrzeugaufbau anliegt.

5. Gummi/Metall-Lager (1) nach einem der Ansprüche 1 bis 4, **dadurch gekennzeichnet, daß** der Anschlagkörper (5a) und der Schließkörper (5b) jeweils als Gummihalbschalen (5a 5b), einerseits Schließhalbschale (5b), andererseits Anschlaghalbschale (5a), ausgebildet sind, wobei die Anschlaghalbschale (5a) oberhalb des Gummi-Filmscharniers (7) eine heruntergezogene Nase (10) unter Bildung einer Aussparung (11) für einen hierin im Zuge der Montage des Gummi/Metall-Lagers (1) scharnierartig eingreifenden Steg (12) der Schließhalbschale (5b) aufweist.

6. Gummi/Metall-Lager (1) nach einem der Ansprüche 1 bis 5, **dadurch gekennzeichnet, daß** der in montierten Zustand unter Reibschluß mit dem Stabilisator (2) verbundene Gummikörper (5) federelastisch ausgebildet ist und Torsionswinkel des Stabilisators (2) im Bereich von etwa 10° bis 60°, vorzugsweise 15° bis 35°, durch intramolekulare Federkräfte aufnimmt.

7. Gummi/Metall-Lager (1) nach einem der Ansprüche 1 bis 6, **dadurch gekennzeichnet, daß** der Gummikörper (5) aus einem Elastomer auf Gummi- oder Kunststoffbasis gefertigt ist.

8. Gummi/Metall-Lager (1) nach einem der Ansprüche 1 bis 7, **dadurch gekennzeichnet, daß** Naturkautschuk (NR) mit einem Anwendungsbereich von ca. -50 °C bis +90 °C, einer Shore-A-Härte von ca. 20 bis 100, vorzugsweise 60, einer Reißdehnung von 100% bis 800%, vorzugsweise mehr als 400%, und einer Dichte von etwa 1,2 g/cm$^3$ zum Einsatz kommt.

9. Gummi/Metall-Lager (1) nach einem der Ansprüche 1 bis 8, **dadurch gekennzeichnet, daß** die Buchse (6) als Metallstreifen aus einer Aluminiumlegierung ausgebildet ist, wobei der Metallstreifen im Querschnitt angenähert die Form eines Omega (Ω) mit einem Buchsenauge (6a) zur Aufnahme des Gummikörpers (5) und beidseitigen Befestigungsschenkeln (6b, 6c) aufweist.

10. Gummi/Metall-Lager (1) nach einem der Ansprüche 1 bis 9, **dadurch gekennzeichnet, daß** das Buchsenauge (6a) innenseitig, dem Schließkörper (5b) zugewandt und dem Filmscharnier (7) gegenüberliegend, eine Rastnase (14) aufweist, welche für eine Vormontage des Gummi/Metall-Lagers (1) auf dem Stabilisator (2) von einer Kante (15) des Schließkörpers (5b) mit Rastwirkung überfahren wird.

11. Gummi/Metall-Lager (1) nach einem der Ansprüche 1 bis 10, **dadurch gekennzeichnet, daß** ein Befestigungsschenkel (6b, 6c) als eine Aussparung (13) im Fahrzeugaufbau hintergreifender Nasenschenkel (6b) und der andere Befestigungsschenkel (6b, 6c) als mit dem Fahrzeugaufbau verbindbarer Schraubschenkel (6c) ausgebildet sind.

12. Gummi/Metall-Lager (1) nach einem der Ansprüche 1 bis 11, **dadurch gekennzeichnet, daß** sich der Nasenschenkel (6b) und der Schraubschenkel (6c) im wesentlichen in parallel zueinander und voneinander beabstandeten Ebenen (A, B) erstrecken, wobei der Abstand (S) der Ebenen (A, B) von der Stärke (W) eines von dem Nasenschenkel (6b) hintergriffenen Bodenblechs (4) des Fahrzeugaufbaus und der im Zuge der Montage vorgebbaren Verspannung des Gummikörpers (5) abhängt.

13. Gummi/Metall-Lager (1) nach einem der Ansprüche 1 bis 12, **dadurch gekennzeichnet, daß** der Abstand (S) der Ebenen (A, B) der Stärke (W) des von dem Nasenschenkel (6b) hintergriffenen Bodenblechs (4) entspricht, wobei der Nasenschenkel (6b) mit seiner Oberseite an einer Innenfläche des Bodenblechs (4) und der Schraubschenkel (6c) mit seiner Unterseite an einer Außenfläche des Bodenblechs (4) anliegt, und daß der Schließkörper (5b) mit seiner Unterseite (9) um ein bestimmtes, die Verspannung des Gummikörpers (5) bestimmendes Maß (M) über die Unterseite des Schraubschenkels (6c) vorkragt.

14. Gummi/Metall-Lager (1) nach einem der Ansprüche 1 bis 13, **dadurch gekennzeichnet, daß** der Gummikörper (5) stabilisatorseitig ein oder mehrere Lagerschalen (16) mit oder ohne anvulkanisierter Gummiauflage (17) aufweist.

**Claims**

1. A rubber/metal bearing (1) for coupling a stabilizing bar (2) to a motor vehicle body, with a rubber element (5) that surrounds the stabilizing bar (2), and with a bushing (6) that can be mounted on the motor vehicle body and serves for receiving the rubber element (5) and the stabilizing bar (2) guided therein, **characterized by** the fact that the rubber element (5) consists of two parts, namely a buffer element (5a) that is fixed in the bushing (6) and a closing element (5b) that is connected to the bushing (6) in a tilting fashion by means of an integral rubber hinge (7).

2. The rubber/metal bearing (1) according to Claim 1, **characterized by** the fact that the buffer element (5a) is vulcanized into the bushing (6).

3. The rubber/metal bearing (1) according to Claim 1 or 2, **characterized by** the fact that the integral rubber hinge (7) is vulcanized onto the bushing (6) and the closing element (5b).

4. The rubber/metal bearing (1) according to one of Claims 1 - 3, **characterized by** the fact that the closing element (5b) contains a buffer (8) that is vulcanized onto the side of the motor vehicle and adjoins the motor vehicle body in the installed state of the rubber/metal bearing (1).

5. The rubber/metal bearing (1) according to one of Claims 1 - 4, **characterized by** the fact that the buffer element (5a) and the closing element (5b) respectively consist of rubber shells (5a, 5b), namely a closing shell (5b) on one side and a buffer shell (5a) on the other side, wherein the buffer shell (5a) contains a downwardly directed projection (10) above the integral rubber hinge (7) such that a recess (11) is formed into which a web (12) of the closing shell (5b) is tilted during the installation of the rubber/metal bearing (1).

6. The rubber/metal bearing (1) according to one of Claims 1 - 5, **characterized by** the fact that the rubber element (5) which, in the installed state, is connected to the stabilizing bar (2) in the form of a frictional engagement is realized elastically and absorbs torsional angles of the stabilizing bar (2) on the order of approximately 10° - 60°, preferably 15° - 35°, by means of intramolecular spring forces.

7. The rubber/metal bearing (1) according to one of Claims 1 - 6, **characterized by** the fact that the rubber element (5) is manufactured from an elastomer on the basis of rubber or plastic.

8. The rubber/metal bearing (1) according to one of Claims 1 - 7, **characterized by** the fact that caoutchouc (NR) with a range of application between approximately -50 °C and +90 °C, a Shore-A hardness of approximately 20 - 100, preferably 60, an elongation at tear of 100 % - 800 %, preferably in excess of 400 %, and a density of approximately 1.2 g/cm$^3$ is used.

9. The rubber/metal bearing (1) according to one of Claims 1 - 8, **characterized by** the fact that the bushing (6) is realized in the form of a metal strip of an aluminum alloy, wherein the metal strip has a cross section that approximately resembles the shape of an omega (Ω), and wherein the bushing contains an opening (6a) for receiving the rubber element (5), as well as mounting limbs (6b, 6c) on both sides.

10. The rubber/metal bearing (1) according to one of Claims 1 - 9, **characterized by** the fact that the bushing opening (6a) contains a catch projection (14) on the inner side, i.e., facing the closing element (5b) and opposite of the integral hinge (7), wherein an edge (15) of the closing element (5b) snaps over this catch projection in order to preinstall the rubber/metal bearing (1) on the stabilizing bar (2).

11. The rubber/metal bearing (1) according to one of Claims 1 - 10, **characterized by** the fact that one mounting limb (6b, 6c) is realized in the form of a projecting limb (6b) that engages behind a recess (13) in the motor vehicle body, and by the fact that the other mounting limb (6b, 6c) is realized in the form of a screw-type limb (6c) that can be connected to the motor vehicle body.

12. The rubber/metal bearing (1) according to one of Claims 1 - 11, **characterized by** the fact that the projecting limb (6b) and the screw-type limb (6c) essentially extend in planes (A, B) that lie parallel to one another and are spaced apart from one another, wherein the spacing (S) between the planes, (A, B) depends on the thickness (W) of a floor plate (4) of the motor vehicle body, behind which the projecting limb (6b) engages, and on the bracing of the rubber element (5) which can be predetermined during the course of the installation.

13. The rubber/metal bearing (1) according to one of Claims 1 - 12, **characterized by** the fact that the spacing (S) between the planes (A, B) corresponds to the thickness (W) of the floor plate (4), behind which the projecting limb (6b) engages, wherein the upper side of the projecting limb (6b) adjoins the inner surface of the floor plate (4) and the underside of the screw-type limb (6c) adjoins the outer surface of the floor plate (4), and by the fact that the underside (9) of the closing element (5b) protrudes over the underside of the screw-type limb (6c) by a certain dimension (M) that defines the bracing of the rubber element (5).

14. The rubber/metal bearing (1) according to one of Claims 1 - 13, **characterized by** the fact that the rubber element (5) contains one or more bearing shells (16) with or without a rubber support (17) vulcanized thereon on the side of the stabilizing bar.

**Revendications**

1. Support métallo-caoutchouc (1) pour l'articulation d'un stabilisateur (2) sur une carrosserie de véhicule disposant d'un corps en caoutchouc (5) entourant le stabilisateur (2) et d'une douille (6) pouvant être fixée sur la carrosserie du véhicule pour abriter le corps en caoutchouc (5) et le stabilisateur (2) qui y est guidé à l'intérieur, **caractérisé en ce que** le corps en caoutchouc (5) est formé de deux parties et qu'il est pour l'essentiel composé d'un corps de butée (5a) fixé dans la douille (6) et d'un corps de fermeture (5b) fixé de façon basculante à la douille (6) par une charnière caoutchoutée (7).

2. Support métallo-caoutchouc (1) selon la revendication 1, **caractérisé en ce que** le corps de butée (5a) est intégré à l'intérieur de la douille (6) par vulcanisation.

3. Support métallo-caoutchouc (1) selon une des revendications 1 ou 2, **caractérisé en ce que** la charnière caoutchoutée (7) est fixée par vulcanisation sur la douille (6) et le corps de fermeture (5b).

4. Support métallo-caoutchouc (1) selon une des revendications 1 à 3, **caractérisé en ce que** le corps de fermeture (5b) présente du côté du véhicule une butée de carrosserie (8) fixée par vulcanisation qui, lorsque le support métallo-caoutchouc (1) est monté, appuie contre la carrosserie du véhicule.

5. Support métallo-caoutchouc (1) selon une des revendications 1 à 4, **caractérisé en ce que** le corps de butée (5a) et le corps de fermeture (5b) forment chacun une coque en caoutchouc (5a, 5b'), à savoir d'un côté la coque de fermeture (5b) et de l'autre côté la coque de butée (5a), la coque de butée (5a) présentant au-dessus de la charnière caoutchoutée (7) un nez (10) avec formation d'un évidement (11) prévu pour une barrette (12) de la coque de fermeture (5b), barrette qui y pénètre à la manière d'une charnière pendant le montage du support métallo-caoutchouc (1).

6. Support métallo-caoutchouc (1) selon une de revendications 1 à 5, **caractérisé en ce que**, à l'état monté, le corps en caoutchouc (5) relié au stabilisateur (2) par fermeture sous friction est à déformation élastique et qu'il absorbe, par forces de ressort intermoléculaires, des angles de torsion du stabilisateur (2) dans la plage d'env. 10° à 60°, de préférence de 15° à 35°.

7. Support métallo-caoutchouc (1) selon une de revendications 1 à 6, **caractérisé en ce que** le corps en caoutchouc (5) est réalisé en élastomère sur base de caoutchouc ou de matière plastique.

8. Support métallo-caoutchouc (1) selon une des revendications 1 à 7, **caractérisé en ce que** l'on utilise du caoutchouc naturel (NR) avec une plage de service d'environ -50 °C à +90 °C, une dureté Shore A d'environ 20 à 100, de préférence 60, un allongement à la rupture de 100 % à 800 %, de préférence cependant supérieur à 400 % et une densité d'environ 1,2 g/cm$^3$.

9. Support métallo-caoutchouc (1) selon une des revendications 1 à 8, **caractérisé en ce que** la douille (6) est constituée d'une bande métallique en alliage d'aluminium dont la section est proche d'un oméga ($\Omega$) avec un oeillet de douille (6a) logeant le corps en caoutchouc (5) et présentant une branche de fixation (6b, 6c) de chaque côté.

10. Support métallo-caoutchouc (1) selon une des revendications 1 à 9, **caractérisé en ce que** l'oeillet de la douille (6a) présente à l'intérieur, tourné vers le corps de fermeture (5b) et en face de la charnière caoutchoutée (7) un nez d'appui (14) sur lequel passe une arête (15) du corps de fermeture (5b) avec effet d'encliquetage pour le prémontage du support métallo-caoutchouc (1) sur le stabilisateur (2).

11. Support métallo-caoutchouc (1) selon une des revendications 1 à 10, **caractérisé en ce qu'**une branche de fixation (6b, 6c) est formée en branche nez (6b) passant derrière un évidement (13) dans la carrosserie du véhicule et que l'autre branche de fixation (6b, 6c) est formée en branche à visser (6c) pouvant être reliée à la carrosserie du véhicule.

12. Support métallo-caoutchouc (1) selon une des revendications 1 à 11, **caractérisé en ce que** la branche nez (6b) et la branche à visser (6c) s'étendent pour l'essentiel parallèlement l'une par rapport à l'autre dans des plans (A, B) écartés, l'écart (S) du plan (A, B) dépendant de l'épaisseur (W) d'une plaque de fond (4) derrière laquelle passe la branche nez (6b) de la carrosserie du véhicule et de la torsion du corps en caoutchouc (5) qui sera défini au moment du montage.

13. Support métallo-caoutchouc (1) selon une des revendications 1 à 12, **caractérisé en ce que** l'écart (S) des plans (A, B) correspond à l'épaisseur (W) de la tôle de fond (4) derrière laquelle passe la branche nez (6b), la branche nez (6b) appuyant avec sa face supérieure sur une face intérieure de la tôle de fond (4) et la branche à visser (6c) appuyant avec sa face inférieure sur une surface extérieure de la tôle de fond (4) et le corps de fermeture (5b) dépassant avec sa face inférieure (9) au-delà de la face inférieure de la branche à visser (6c) à savoir d'une cote (M) donnée déterminant la torsion du corps en caoutchouc (5).

14. Support métallo-caoutchouc (1) selon une des revendications 1 à 13, **caractérisé en ce que** le corps en caoutchouc (5) présente du côté du stabilisateur une ou plusieurs coquilles de coussinet (16) avec ou sans revêtement vulcanisé (17).

Fig.1

Fig. 2a

Fig. 2b

# *Fig.3*